**Europäisches Patentamt**

**European Patent Office**

**Office européen des brevets**

(19)

(11) Publication number: **0 102 114**
**B1**

(12) # EUROPEAN PATENT SPECIFICATION

(45) Date of publication of patent specification: **03.09.86**

(51) Int. Cl.⁴: **B 29 C 63/34, B 29 C 57/00**

(21) Application number: **83201146.4**

(22) Date of filing: **01.08.83**

(54) Preparation of plastic lined pipe and apparatus therefor.

(30) Priority: **23.08.82 US 410203**

(43) Date of publication of application:
**07.03.84 Bulletin 84/10**

(45) Publication of the grant of the patent:
**03.09.86 Bulletin 86/36**

(84) Designated Contracting States:
**BE DE FR IT NL**

(56) References cited:
**DE-B-1 178 582**
**DE-B-2 004 691**
**GB-A-2 002 677**
**US-A-3 744 115**

(73) Proprietor: **THE DOW CHEMICAL COMPANY**
**2030 Dow Center Abbott Road P.O. Box 1967**
**Midland, MI 48640 (US)**

(72) Inventor: **Prueter, Elton Delmont**
**1400 Riser**
**Saginaw Michigan 48603 (US)**
Inventor: **West, Walter Hewitt**
**601 Main Street**
**Essexville Michigan 48732 (US)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

## Description

The invention relates to an apparatus and a method for forming a flange on a terminal portion of a thermoplastic liner positioned in a ductile metal pipe having a terminal radially extending flange.

In the handling of corrosive liquids and liquids in which minimum metallic contamination is desired, oftentimes one may make use of so-called plastic lined pipes. Such pipes or conduits may be lined with thermoset or thermoplastic materials. For many applications and ease of fabrication, thermoplastic liners are oftentimes preferred. Such thermoplastic liners may differ widely in composition and may comprise, for example, polytetrafluoroethylene, polyvinylidene fluoride, polypropylene, or the like. It is generally advantageous if such pipe may be provided in standard lengths and field fabricated on the jobsite.

U.S. Patent 3,744,115 teaches that simultaneous deformation of a pipe and liner is obtained by applying a suitable flanging apparatus to an end of a plastic lined pipe, applying internal hydraulic pressure such as by means of an elastomeric plug, the force being sufficient to outwardly deform the terminal portion of the metal pipe to form a generally radially extending flange. If the plastic liner is of a nature which exhibits significant "spring back"; that is, if after deformation the liner tends to return to the original cylindrical form, a retainer may be employed to hold the plastic liner to the metal pipe flange thereby providing a plastic liner flange which extends generally parallel to the metal pipe flange. The plastic flange is subsequently annealed and the retainer removed.

It would be desirable if there were available a simpler method and apparatus of providing a plastic lined pipe with a terminal radially extending flange. It would also be desirable if such a method and apparatus were readily adapted for on-site fabrication of such flanges.

These benefits and other advantages in accordance with the present invention are achieved in an apparatus for forming a flange on a terminal portion of a thermoplastic liner positioned within a ductile metal pipe having a terminal radially extending flange, the apparatus comprising means to rotatably support the plastic lined pipe means to rotate said plastic lined pipe; means to apply a heated gas to the exterior terminal portion of said liner adjacent said pipe flange; and a flange forming means generally coaxially positioned relative to said pipe for forcing the terminal portion of the liner against said pipe flange to thereby form a liner flange generally contiguous with the pipe flange.

Also contemplated within the scope of the present invention is a method for conforming a terminal end portion of a thermoplastic liner positioned in a metal pipe to a generally radially extending flange disposed on at least one end of said metal pipe, comprising the steps of rotating said pipe, applying a heated gas to the terminal end portion only of said plastic liner in the region adjacent to said pipe flange, to raise the temperature of the terminal end of the liner to a thermoplastic softening temperature whereby the thermoplastic material of the liner is deformable without splitting or tearing, deforming said liner to conform to the general configuration of the pipe flange and cooling said liner portion to a temperature below the deformation temperature of the thermoplastic material of the liner.

Further features and advantages of the present invention will become more apparent from the following specification taken in connection with the drawings wherein:

Figure 1 depicts a terminal end of a plastic lined pipe having an extended liner portion;

Figure 2 is a perspective view of an apparatus in accordance with the invention; and

Figure 3 is a part cross-sectional view of a terminal portion of a flanged lined pipe in contact with a forming die.

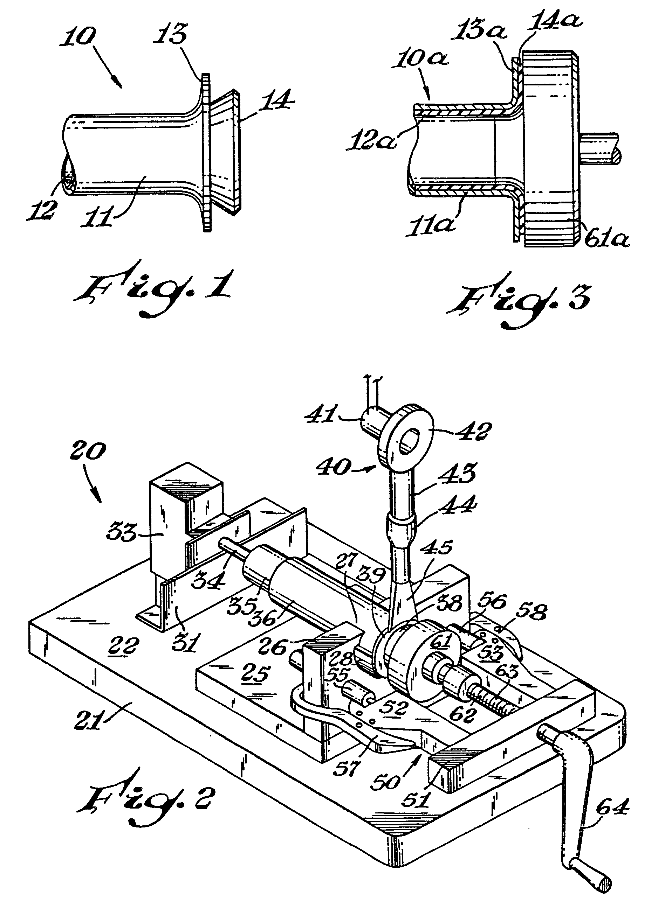

In Figure 1, there is shown a view of a lined pipe 10 comprising an outer metal pipe 11 and an internal liner 12 of a synthetic resinous thermoplastic material. The liner 12 is coaxially arranged within the metal pipe 11. The metal pipe 11 has disposed on one end thereof an outwardly extending radial flange 13 which is formed by flanging the ductile metal of the pipe by means of an apparatus as set forth in U.S. 3,744,115 wherein no retainer has been employed. During the forming process, the liner portion 14 is forced to conform to the adjacent surface of the flange 13 of the pipe 11. However, on release of hydraulic pressure, the terminal portion of the liner tends to return to its original cylindrical configuration. Accordingly, during the forming process, some permanent deformation of the liner occurs resulting in the end portion 14 which has a generally frusto-conical configuration wherein the larger diameter of the frusto-conical configuration is disposed remote from the pipe flange 13.

Figure 2 schematically illustrates an apparatus 20 for carrying out the invention comprising a base member 21 having affixed thereto on an uppermost surface 22 a support member 25 and a pipe support member 26. The pipe support member 26 has a pipe receiving slot 27 and is provided with a generally arcurate flange engaging member 28 integral with the support member 26 and surrounding a major portion of the slot 27. Remotely disposed from the flange engaging member 28 is a support 31 which is advantageously slidably affixed to the base member 21. A conduit rotating means 33 comprising an electric gear head motor, hydraulic motor or similar controlled speed rotating device is mounted on the conduit support 31 and has an output shaft 34 generally coaxially disposed relative to the flange engaging member 28. Additional rotating mechanism may be employed to rotatably support long pipe sections. The output shaft 34 has affixed thereto a conduit engaging member or plug 35 adapted to frictionally engage the inner surface of a conduit to be rotated.

A metal pipe 36 having a synthetic resinous thermoplastic liner 38 (only a terminal portion of which is shown) is in engagement with the rotatable plug 35. The pipe 36 defines a radially extending flange 39 generally equivalent to the flange 13 of Figure 1. The terminal portion of the liner 38 is generally equivalent to the liner portion 14 of Figure 1. A hot gas supply 40 is provided for supplying a hot gas to the terminal liner portion 38. The supply comprises an electric motor 41 which drives a blower 42 for forcing air through an electric heater portion 43. The hot gas supply assembly 40 is frequently referred to as an electric heat gun or flameless torch. The outlet from the heater portion 43 is operably connected to an adapter 44 which terminates in a nozzle 45. The nozzle 45 is of a so-called "fish-tail" variety wherein the major dimension of the outlet is disposed generally parallel to the pipe flange 39.

A thermoplastic flange forming assembly 50 comprises a generally U-shaped frame 51 having legs 52 and 53 which project toward the support member 26. The legs 52 and 53 engage posts 55 and 56 which are rigidly affixed to the support member 26. The legs 52 and 53 have affixed thereto pivotal arms 57 and 58 respectively which are adapted to engage a face of the support member 26 remotely disposed from the pipe flange 39. A forming die 61 is rotatably mounted on a linear positioner 62, which is adapted to move the die 61 generally axially with respect to the conduit 36. As shown in Figure 2, the linear positioner 62 comprises a threaded shaft 63 which engages a central portion of the U-frame 51 and is actuated by a manually operated handle 64. The apparatus of Figure 2 is particularly suitable for on-the-site fabrication where portability and light weight are desired. For less mobile installation, the linear positioner or optionally may have a hydraulic or pneumatic cylinder or an electrically driven threaded shaft.

In Figure 3 there is schematically depicted a cross-sectional view of a plastic lined metal pipe 10a. The pipe consists of a ductile outer metal pipe 11a and an internal synthetic resinous thermoplastic lining 12a. The pipe 11a defines a generally radially extending flange 13a while the liner 12a has formed thereon a generally radially extending flange 14a which is contiguous with the adjacent surface of the pipe flange 13a. A forming die 61a is shown in engagement with the liner flange 14a. Beneficially, the die 61a is formed of a material having a relatively high heat conductivity or a mass sufficient so that cooling of the flange 14a occurs relatively rapidly. Materials such as aluminum and copper are very satisfactory. In many instances, low carbon steel may be used with a significant benefit.

In operation of the apparatus and method of the invention, a plastic lined pipe is flanged employing the apparatus of U.S. 3,744,115 without benefit of a retainer as suggested therein and resulting in a conduit end such as that shown in Figure 1. A plastic lined pipe such as is shown in Figure 1 is positioned in the apparatus 20 of Figure 2 within the slot 27 with the pipe flange 39 adjacent the flange engaging member 28. The pipe is rotated at an appropriate rage such as from 10 to 40 revolutions per minute. The choice of the speed is usually not critical, slower speeds generally being employed with larger diameter pipes. The hot gas supply 40 delivers a hot gas such as hot air to the liner portion 38 (or liner portion 14 of Figure 1). When the liner portion 38 has reached its thermoplastic softening temperature, the temperature at which it may be readily deformed without splitting or cracking, the die 61 is advanced to deform the liner portion 38 and conform it to the pipe flange 39 (or flange 13, 13a of Figures 1 and 3, respectively). As the heat capacity of the liner portion 38 is relatively smaller than that of the die 61 or 61a employed to deform the liner, relatively rapid cooling occurs from the hot liner portion 38 to the relatively cooler die 61. The die 61 is then removed and the liner portion 38 remains adjacent the pipe flange 13, as shown in Figure 3.

The procedure employing the apparatus and method of the invention is found to be more rapid and more convenient than the retainer used in U.S. Patent 3,744,115, and thus provides more reliable and uniform flanges on the liner portion of plastic lined pipes.

The foregoing description is intended to be illustrative and not to be construed as being restrictive or otherwise limiting of the present invention, except as set forth in the hereto-appended claims.

**Claims**

1. An apparatus (20) for forming a flange (14) on a terminal portion of a thermoplastic liner (38) positioned within a ductile metal pipe (36) having a terminal radially extending flange (39), the apparatus comprising means (26) to rotatably support the plastic lined pipe means (33, 34, 35) to rotate said plastic lined pipe (36); means (40) to apply a heated gas to the exterior terminal portion of said liner (38) adjacent said pipe flange (39); and a flange forming means (61) generally coaxially positioned relative to said pipe (36) for forcing the terminal portion of the liner (38) against said pipe flange (39) to thereby form a liner flange (14) generally contiguous with the pipe flange (39).

2. The apparatus of Claim 1 wherein the means (35) to rotate the pipe is in frictional engagement with the pipe.

3. The apparatus of Claim 1 wherein the means (40) to apply heated gas to the terminal portion of the plastic liner (38) is a heat gun.

4. The apparatus of Claim 1 wherein the forming means (61) is a rotatably mounted die.

5. The apparatus of Claim 4 wherein the die (61) is mounted on a threaded shaft (63) which is threadably engaged in a fixed frame member.

6. A method for conforming a terminal end portion of a thermoplastic liner (38) positioned in a metal pipe (36) to a generally radially extending flange (39) disposed on at least one end of said metal pipe (36), comprising the steps of rotating said pipe, applying a heated gas to the terminal end portion only of said plastic liner (38) in the region adjacent to said pipe flange (39), to raise the temperature of the terminal end of the liner (38) to a thermoplastic softening temperature whereby the thermoplastic material of the liner (38) is deformable without splitting or tearing, deforming said liner (38) to conform to the general configuration of the pipe flange (39) and cooling said liner portion to a temperature below the deformation temperature of the thermoplastic material of the liner (38).

7. The method of Claim 6 wherein the terminal end portion of the liner (38) is deformed with a die (61) rotatably mounted on a linear positioner (62) for movement of the die (61) in an axial direction with respect to the longitudinal axis of the pipe (36).

**Patentansprüche**

1. Vorrichtung (20) zum Ausbilden eines Flansches (14) am Endteil einer thermoplastischen Auskleidung (38), die in einem verformbaren Metallrohr (36) mit einem sich am Ende radial erstreckenden Flansch (39) angeordnet ist, dadurch gekennzeichnet, daß die Vorrichtung Einrichtung (26) zum drehbaren Lagern des mit Kunststoff ausgekleideten Rohres, Einrichtungen (33, 34, 35) zum Drehen des mit Kunststoff ausgekleideten Rohres (36), Einrichtungen (40) um ein heißes Gas auf das außen nebem dem Rohrflansch (39) liegende Endteil der Auskleidung (38) aufzubringen und eine Flansch ausbildende Einrichtung (61) aufweist, die im allgemeinen koaxial zum Rohr angeordnet ist, zum Andrücken des Endteils der Auskleidung (38) gegen den Rohrflansch (39), um dadurch einen Flansch (14) der Auskleidung auszubilden, der im allgemeinen an dem Rohrflansch (39) anliegt.

2. Vorrichtung nach Anspruch 1, dadurch gekennzeichnet, daß die Einrichtung (35) zum Drehen des Rohres reibschlüssig am Rohr angreift.

3. Vorrichtung nach Anspruch 1, dadurch gekennzeichnet, daß die Einrichtung (14) zum Aufbringen von heißem Gas auf das Endteil der Kunstoffauskleidung (38) ein Heißstrahlrohr ist.

4. Vorrichtung nach Anspruch 1, dadurch gekennzeichnet, daß die Formeinrichtung (61) eine drehbar befestigte Druckplatte ist.

5. Vorrichtung nach Anspruch 4, dadurch gekennzeichnet, daß die Druckplatte (61) an einem Gewindestab (63) befestigt ist, der in einen fasten Rahmen einschraubber ist.

6. Verfahren zum Anpassen eines Endteils einer in einem Metallrohr (36) angeordneten thermoplastischen Auskleidung (38) an einen sich im allgemeinen radial erstreckenden Flansch (39), der an mindestens einem Endes des Metallrohres (36) vorhanden ist, gekennzeichnet durch die Schritte, Drehen des Rohres, Aufbringen von heißem Gas nur auf den dem Rohrflansch (39) benachbarten Endteil der Kunststoffauskleidung (38), um die Temperatur des Endteils der Auskleidung (38) auf die Erweichungstemperatur des Thermoplasten zu erhöhen, so daß das thermoplastische Material der Auskleidung (38) ohne Bersten oder Reißen verformbar ist, Verformen der Auskleidung (38), so daß sie der allgemeinen Form des Rohrflansches (39) angepasst ist, und Abkühlen des Auskleidungsteils auf eine unterhalb der Verformungstemperatur des thermoplastischen Materials der Auskleidung (38) liegenden Temperatur.

7. Verfahren nach Anspruch 6, dadurch gekennzeichnet, daß man das Endteil der Auskleidung (38) mit einer Druckplatte (61) verformt, die auf einem geraden Stellwerk (62) drehbar und in axialer Richtung zur Längsachse des Rohres (36) beweglich montiert ist.

**Revendications**

1. Dispositif (20) servant à former une bride (14) sur une partie extrême d'une chemise thermoplastique (38) placée à l'intérieur d'un tuyau en métal ductile (36) présentant une bride d'extrémité s'étendant radialement (39), ce dispositif comprenant des moyens (26) pour soutenir en rotation le tuyau à chemise plastique, des moyens (33, 34, 35) pour faire ledit tuyau à chemise plastique (36), des moyens (40) pour appliquer un gaz chauffé sur la partie d'extrémité extérieure de ladite chemise (38) qui est contigué à ladite bride de tuyau (39), et un moyen de formation de bride (61) disposé de manière dans l'ensemble coaxiale par rapport audit tuyau (36) afin d'appliquer de force la partie extrême de la chemise (38) contre ladite bride de tuyau (39), de façon à former ainsi une bride de chemise (14) dans l'ensemble contigué à la bride de tuyau (39).

2. Dispositif selon la revendication 1, caractérisé en ce que le moyen (35) pour faire tourner le tuyau est en contact de friction avec ce tuyau.

3. Dispositif selon la revendication 1, caractérisé en ce que le moyen (40) pour appliquer un gaz chauffé sur la partie extrême de la chemise plastique (38) est un pistolet à chaleur.

4. Dispositif selon la revendication 1, caractérisé en ce que le moyen de formage (61) est une matrice montée rotative.

5. Dispositif selon la revendication 4, caractérisé en ce que le matrice (61) est montée sur une tige filetée (63) qui est vissée dans une pièce-châssis fixe.

6. Procédé pour conformer une partie d'extrémité libre d'une chemise thermoplastique (38) placée dans un tuyau en métal (36) sous forme d'une bride (39) s'étendant dans l'ensemble radialement et disposée sur au moins une extrémité dudit tuyau en métal (36), consistant à faire tourner ledit tuyau, à appliquer un gaz chauffé sur seulement la partie d'extrémité libre de ladite chemise plastique (38) dans la région contiguë à ladite bride de tuyau (39), à élever la température de l'extrémité libre de la chemise (38) jusqu'à une température de ramollissement thermoplastique de façon qu'ainsi la matière thermoplastique de la chemise (38) soit déformable sans fissuration ou déchirure, à déformer ladite chemise (38) afin de la conformer à la configuration générale de la bride de tuyau (39) et à refroidir ladite partie de chemise jusqu'à une température inférieure à la température de déformation de la matière thermoplastique de la chemise (38).

7. Procédé selon la revendication 6, caractérisé en ce que la partie extrême libre de la libre de la chemise (38) est déformée à l'aide d'une matrice (61) montée rotative sur un organe de positionnement linéaire (62) en vue d'un mouvement de la matrice (61) suivant une direction axiale par rapport à l'axe longitudinal du tuyau (36).

*Fig. 1*

*Fig. 3*

*Fig. 2*

1